# EUROPÄISCHE PATENTSCHRIFT

(11) **EP 1 557 852 B1**
(45) Veröffentlichungstag und Bekanntmachung des Hinweises auf die Patenterteilung: **21.02.2007**
(21) Anmeldenummer: 05000348.2
(22) Anmeldetag: 10.01.2005
(51) Int. Cl.: H01H 13/00, B60Q 5/00, B60R 21/20, B62D 1/04, H01H 9/00

(54) **Fahrzeuglenkrad**
Vehicle steering-wheel
Volant de véhicule

(30) Priorität: 22.01.2004 DE 202004000953 U
(43) Veröffentlichungstag der Anmeldung: 27.07.2005
(73) Patentinhaber: TRW Automotive Safety Systems GmbH, 63743 Aschaffenburg (DE)
(72) Erfinder: Frisch, Ralph, 63776 Mömbris (DE)
(74) Vertreter: Kitzhofer, Thomas

(56) Entgegenhaltungen:
- EP-A- 1 418 095
- US-A1- 2002 079 203
- US-A1- 2004 004 344

## Beschreibung

Die Erfindung betrifft ein Fahrzeuglenkrad mit einem Lenkradskelett, einer Längsachse und einem Hupenkontaktschalter, der zwei elektrische Kontaktelemente aufweist, die bei einer Relativbewegung von zwei Bauteilen des Fahrzeuglenkrads bei der Hupenbetätigung miteinander in Berührung gebracht werden.

Ein derartiges Fahrzeuglenkrad ist beispielsweise aus dem deutschen Gebrauchsmuster 200 17 527 bekannt. Bei dieser Vorrichtung ist ein Gassackmodul mit dem Lenkradskelett verbunden und so gelagert, daß es zur Betätigung der Hupe in Richtung der Längsachse verschiebbar ist. Die elektrischen Kontaktelemente umfassen einen an dem Gassackmodul rückseitig abstehenden, elektrisch leitenden Rasthaken, der beim Betätigen der Hupe mit einem ebenfalls leitenden Federdraht in Kontakt gebracht wird. Ferner ist es bekannt, die Kontaktelemente als metallische Stanzteile auszubilden, die an beweglichen Teilen des Fahrzeuglenkrades angeordnet sind und die bei der Hupenbetätigung miteinander in Berührung kommen.

Die bestehenden Lösungen aus dem Stand der Technik erfordern immer eine bestimmte Bauhöhe und häufig auch besondere, durch Stanzen und/oder Biegen zu fertigende Teile, deren Fertigung kostenintensiv und deren Montage umständlich ist.

Ausgehend von diesen Nachteilen liegt der Erfindung die Aufgabe zugrunde, diese Nachteile zumindest teilweise zu vermeiden und einen besonders kostengünstigen Hupkontaktschalter vorzusehen.

Erfindungsgemäß wird diese Aufgabe bei einem Fahrzeuglenkrad der eingangs genannten Art dadurch gelöst, daß die elektrischen Kontaktelemente Kontaktdrähte sind. Damit sind keine besonderen Stanzteile oder Sonderteile mehr erforderlich. Vielmehr müssen nur noch zwei ohnehin vorgesehene Drähte abschnittsweise abisoliert sein, die durch die Relativbewegung von zwei Bauteilen des Fahrzeuglenkrads miteinander in Kontakt gebracht werden. Die Hupkontakte bildenden Drähte sind Teil des bekannten Hupstromkreises. Die Hupkontakte und der Hupstromkreis sind so ausgelegt, daß bei einer Berührung der Drähte die Hupe ertönt.

Die beiden sich vorzugsweise, in Längsachse gesehen, kreuzenden Kontaktdrähte können entkoppelt voneinander an zwei Bauteilen vorgesehen werden, beispielsweise eines an der Unterseite der Zwischenplatte eines Gassackmoduls und das andere an der entsprechenden Stelle an der Oberseite der Nabe des Skeletts.

Besonders kompakt und einfach zu montieren ist der erfindungsgemäße Hupkontaktschalter, wenn die beiden Kontaktdrähte gekoppelt an einem gemeinsamen Bauteil vorgesehen sind. Beispielsweise können die Kontaktdrähte in einer Ausnehmung parallel zueinander verlaufend angeordnet sein, wobei ein erster Kontaktdraht von dem zweiten, mit einer U-förmigen Krümmung versehenen Kontaktdraht, beabstandet ist. Zur Betätigung der Hupe wird der federnde zweite Kontaktdraht im gekrümmten Bereich kraftbeaufschlagt und tordiert sowie auf den ersten Kontaktdraht gedrückt, um den Hupstromkreis zu schließen. Nach der Hupenbetätigung bewegt sich der zweite Kontaktdraht selbstständig in die unbetätigte Ausgangsstellung zurück.

Schließlich könnten die Kontaktdrähte in einem gemeinsamen Schalterelement mit einem eigenen Gehäuse angeordnet sein. Dieses Schalterelement kann mit Steckern versehen bei der Montage einfach auf die entsprechende Stelle befestigt werden, wobei eine entsprechende Kupplung die notwendige Fixierung des Streckers sicherstellt, so daß keine weiteren Fixierungsmittel erforderlich sind.

Die gemeinsame Anordnung der beiden Kontaktdrähte an einem Bauteil ist mit dem weiteren Vorteil verbunden, daß der federnde Kontaktdraht gegebenenfalls die Funktion der Rückstellfeder innerhalb des Fahrzeuglenkrads übernehmen kann. Durch entsprechende Dimensionierung des federnden Kontaktdrahtes ist es deshalb nicht mehr erforderlich, neben dem elektrischen Kontaktelement zusätzliche Rückstellfedern für das Gassackmodul oder, falls kein Gassack vorgesehen sein sollte, für das vom Fahrer zu bewegende Bauteil (z.B. Lenkradnabenkappe) vorzusehen. Damit läßt sich eine besonders kompakte und niedrige Bauhöhe verwirklichen.

Um einen guten Kontakt zwischen den Kontaktdrähten bei der Hupenbetätigung zu gewährleisten, kann an einem der die Relativbewegung ausführenden Bauteile ein Betätigungselement vorgesehen sein, das einen Kontaktdraht bei der Hupenbetätigung auf den anderen drückt. Dieses Betätigungselement kann entweder als ein zu montierendes Zusatzbauteil ausgebildet sein oder einstückig an einem Bauteil angeformt sein, z.B. durch Anspritzen an einem Kunststoffteil. Dies ist besonders vorteilhaft, da ein Kunststoffelement elektrisch isolierend ist und keine Auswirkung auf die Funktionsweise des Hupkontaktes hat.

Die Erfindung wird nachfolgend anhand von bevorzugten Ausführungsformen beschrieben, wobei auf die beigefügten Zeichnungen Bezug genommen wird. In diesen zeigen:
- Figur 1 eine schematische Querschnittansicht durch eine erste Ausführungsform des erfindungsgemäßen Fahrzeuglenkrades;
- Figur 2a eine vergrößerte Ansicht des Details II des Fahrzeuglenkrades gemäß Figur 1 bei unbetätigter Hupe;
- Figur 2b eine vergrößerte Ansicht des Details II des Fahrzuglenkrades gemäß Figur 1 bei betätigter Hupe;
- Figur 3 eine schematische Querschnittansicht durch eine zweite Ausführungsform des erfindungsgemäßen Fahrzeuglenkrades; und
- Figur 4 eine vergrößerte perspektivische Ansicht des Details IV aus Figur 3.

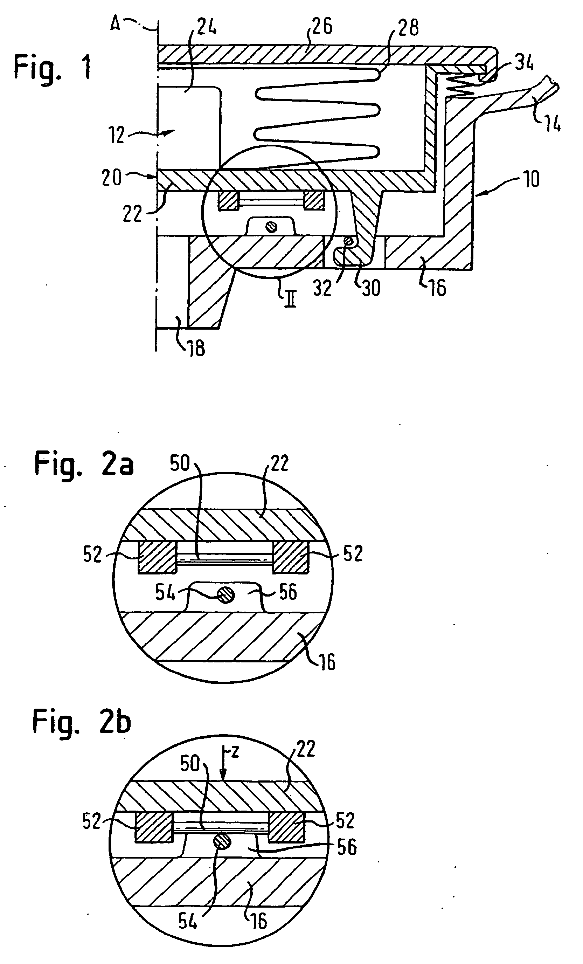

Gemäß Figur 1 weist ein Fahrzeuglenkrad ein Lenkradskelett 10 und ein Gassackmodul 12 auf. Die Längsachse A des Lenkrades ist durch eine strichpunktierte Linie dargestellt. Das Lenkradskelett 10 hat einen umschäumten und nicht dargestellten Lenkradkranz, der über Speichen 14 mit einer topfförmigen Lenkradnabe 16 verbunden ist. Im Bereich der Längsachse A des Fahrzeuglenkrades hat die Nabe 16 eine Aufnahmeöffnung 18 zur Aufnahme einer Lenksäule.

Das als "Floating-Horn" ausgebildetes Gassackmodul 12 ist beispielhaft dargestellt und hat ein topfförmiges Modulgehäuse 20 mit einem Boden 22, welcher gleichzeitig den Träger für einen Gasgenerator 24 bildet. Das Modulgehäuse 20 ist zum Fahrzeuginnenraum hin mit einer Abdeckung 26 verschlossen, die einen im Inneren des Modulgehäuses 22 gefalteten Gassack 28 abdeckt.

An der Unterseite des Bodens 22 sind mehrere in bekannter Weise ausgebildete Rasthaken 30 zur Befestigung des Modulgehäuses 20 an der Nabe 16 angeformt. Die Befestigung erfolgt über skelettfeste Arretierungsmittel. Die Arretierungsmittel bestehen hier aus im Skelett fest gehalterten, aber um einen gewissen Betrag seitlich verschieblichen Bauteilen (z. B. Drähten 32), die die Rasthaken 30 in Einbaulage verriegeln. Diese Verbindung ist so ausgelegt, daß eine Bewegung des Modulgehäuses 22 in Richtung der Längsachse A innerhalb des Lenkrades ermöglicht ist, ohne daß die Rastverbindung 30, 32 gelöst wird.

Zwischen dem Modulgehäuse 20 und dem Skelett 10 sind in an sich bekannter Weise Druckfedern 34 angeordnet. Diese Druckfedern 34 üben eine entgegen der Betätigungskraft für die Hupe wirkende Rückstellkraft auf das Modulgehäuse 20 aus. Sie werden auch als Rückstellfedern bezeichnet.

An der Unterseite des Bodens 22 des Modulgehäuses 20 erstreckt sich abschnittsweise ein erster Kontaktdraht 50 zwischen zwei Stegen 52 am Boden 22 des Modulgehäuses 20. Die Stege 52 können aus Kunststoff oder Metall sein. Der Kontaktdraht 50 kann isoliert sein (bei metallenen Stegen 52 ist er zwingend isoliert), zwischen den Stegen 52 ist er in jedem Fall unisoliert. Dieser erste Kontaktdraht 50 stellt den ersten von zwei Kontaktdrähte des Hubkontaktschalters dar. Der zweite Kontaktdraht 54 des Hubkontaktschalters erstreckt sich in Betrachtungsrichtung der Figuren 1 bis 2b verlaufend und damit quer zur Längsachse des ersten Kontaktdrahts 50 über einen bestimmten Abschnitt auf der Oberseite der Nabe 16 zwischen zwei Stegen 56, die z.B. in der Skelettumschäumung vorgesehen sind. Auch der zweite Kontaktdraht 54 ist nicht isoliert in dem Abschnitt zwischen den Stegen 56. Die Anordnung der Kontaktdrähte 50, 54 ist so gestaltet, daß der erste Kontaktdraht 50 in Einbaulage den zweiten Kontaktdraht 54 in Richtung Längsachse A gesehen kreuzt, aber von diesem beabstandet ist. Bei der Hupenbetätigung wird der erste Kontaktdraht 50 auf den zweiten Kontaktdraht 54 gedrückt; dies schließt den Hupkontaktschalter. Zumindest einer der beiden Kontaktdrähte 50, 54 ist elastisch federnd z.B. wie ein Biegebalken gelagert, so daß er bei der Hupenbetätigung einfedert. Die Rückstellbewegung des Moduls 10 kann der einfedemde Kontaktdraht 50, 54 unterstützen.

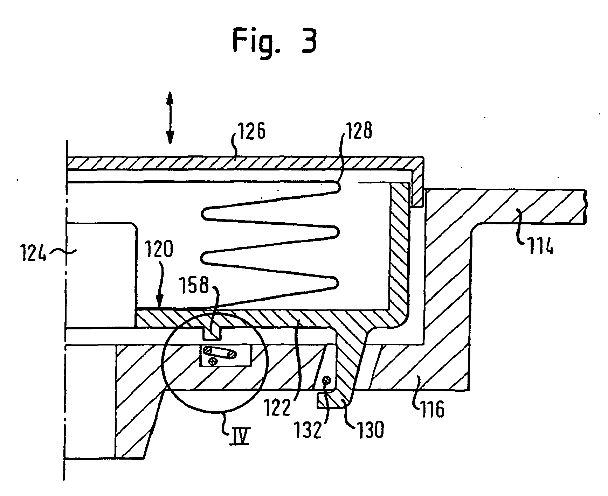

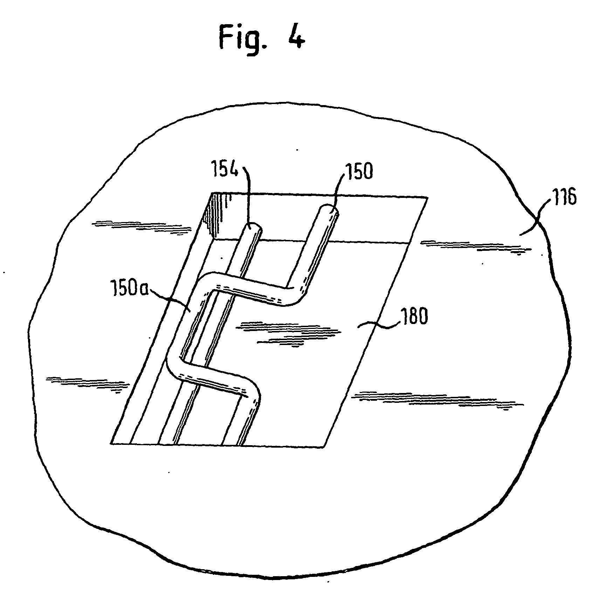

Die in den Figuren 3 und 4 dargestellte zweite Ausführungsform unterscheidet sich von der zuvor beschriebenen dadurch, daß die beiden sich kreuzenden Kontaktdrähte des Hupkontaktschalters gekoppelt an einem gemeinsamen Bauteil des Fahrzeuglenkrads vorgesehen sind. Die in den Figuren 1 bis 2b entsprechenden Bauteile der zweiten Ausführungsform sind mit um 100 erhöhten Bezugszeichen gekennzeichnet. Der wesentliche Unterschied bei dieser Ausführungsform liegt darin, daß die sich kreuzenden Kontaktdrähte 150 und 154 nicht entkoppelt, wie bei der ersten Ausführungsform, sondern gekoppelt an der Lenkradnabe 116, d.h. am selben Bauteil, angeordnet sind. Zu diesem Zweck ist in der Oberseite der Lenkradnabe 116 eine muldenförmige Ausnehmung 180 vorgesehen, in der sich die durch das Skelett 10 verlaufenden, isolierten Kontaktdrähte 150 und 154 etwa parallel zueinander erstrecken. Im Bereich der Ausnehmung 180 sind die Kontaktdrähte 150, 154 nicht isoliert. Der erste Kontaktdraht 150 ist etwas nach oben und zur Seite versetzt von dem zweiten Kontaktdraht 154 in der Ausnehmung 180 angeordnet. Er weist ferner eine U- oder bogenförmige Krümmung 150a auf, die den zweiten Kontaktdraht 154 in Ausgangslage in Richtung Längsachse A gesehen kreuzt, aber von ihm beabstandet ist. Der erste Kontaktdraht 150 ist als Torsionsfeder ausgebildet und hat eine ausreichende Federkraft, um die Funktion der Rückstell- oder Druckfedern 34 zu übernehmen. Bei der Hupenbetätigung drückt das Modulgehäuse 120 mit einem rückseitig vorstehenden Betätigungselement in Form eines Vorsprungs 158 gegen den ersten Kontaktdraht 150 im Bereich der Krümmung 150a und tordiert ihn gegen die Federkraft des ersten Kontaktdrahts 150, bis sich die Kontaktdrähte 150, 154 berühren, und schließt so den Hupkontaktschalter.

Alternativ hierzu können die Kontaktdrähte 150, 154 natürlich auch in der Umschäumung des Skeletts 10 untergebracht sein, was nicht extra dargestellt werden muß.

Als Material für die Kontaktdrähte 50, 54, 150, 154 kann z.B. Federbronze gewählt werden.

Vorzugsweise sind natürlich mehrere Hupkontaktschalter zwischen Modul und Skelett 10, 110 vorgesehen, die alle zusammen nur durch die Kontaktdrähte 50, 54, 150, 154 gebildet werden, welche schleifenförmig zwischen Modul und Skelett verlaufen.

Wegen der gekoppelten Anordnung der Kontaktdrähte 150, 154 in der Ausnehmung 180 weist insbesondere bei der zweiten Ausführungsform das Fahrzeuglenkrad eine flachere Bauhöhe als der Stand der Technik auf. Daneben sind bei dieser Ausführungsform keine zusätzlichen Druckfedern für die Hupenrückstellung erforderlich; der Hupkontakt übernimmt mithin die Rückstellfunktion. Allen Ausführungsformen ist gemein, daß wenig separate Bauteile benötigt werden und die Kontaktdrähte Teil der ohnehin vorgesehenen Signalstrom führenden Leiter sind. Es versteht sich von selbst, daß die erfindungsgemäße Ausbildung nicht auf solche Fahrzeuglenkräder beschränkt ist, die ein Gassackmodul aufweisen.

## Patentansprüche

1. Fahrzeuglenkrad mit einem Lenkradskelett (10, 110), einer Längsachse (A), und einem Hupkontaktschalter, der zwei elektrische Kontaktelemente aufweist, die mittels einer Relativbewegung von zwei Bauteilen zueinander zu einer Hupenbetätigung miteinander in Berührung gebracht werden, **dadurch gekennzeichnet, daß** die elektrischen Kontaktelemente Kontaktdrähte (50,54; 150,154) sind.

2. Fahrzeuglenkrad nach Anspruch 1, **dadurch gekennzeichnet, daß** die Kontaktdrähte (50,54;150,154) entkoppelt von einander an den Bauteilen vorgesehen sind, die bei der Hupenbetätigung eine Relativbewegung zueinander ausführen.

3. Fahrzeuglenkrad nach einem der vorhergehenden Ansprüche, **dadurch gekennzeichnet, daß** beide Kontaktdrähte (150,154) an einem gemeinsamen Bauteil in einem Abstand zueinander vorgesehen sind, wobei wenigstens einer der Kontaktdrähte (150) durch Krafteinwirkung von außen bei der Hupenbetätigung in Richtung zum anderen bewegt wird.

4. Fahrzeuglenkrad nach einem der vorhergehenden Ansprüche, **dadurch gekennzeichnet, daß** zumindest einer der Kontaktdrähte (50;154) federnd ausgebildet ist.

5. Fahrzeuglenkrad nach einem der vorhergehenden Ansprüche, **dadurch gekennzeichnet, daß** eines der sich bei der Hupenbetätigung annähernden Bauteile ein auf dem Lenkradskelett (10,110) federnd und in Richtung Längsachse (A) verschieblich gelagertes Gassackmodul (12,112) umfaßt und daß der Hupenkontaktschalter zwischen dem Gassackmodul (12, 112) und dem Lenkradskelett (10,110) angeordnet ist.

6. Fahrzeuglenkrad nach Anspruch 4 oder 5, mit zumindest einer zwischen den sich bei der Hupenbetätigung annähernden Bauteilen wirkenden Rückstellfeder, wobei der federnde Kontaktdraht (154) als Rückstellfeder dient.

7. Fahrzeuglenkrad nach einem der Ansprüche 4 bis 6, **gekennzeichnet durch** ein Betätigungselement, das einen Kontaktdraht (154) bei der Hupenbetätigung gegen den anderen drückt.

8. Fahrzeuglenkrad nach Anspruch 7, **dadurch gekennzeichnet, daß** das Betätigungselement als rückseitiger Vorsprung (158) am vom Fahrer zur Hupenbetätigung bewegten Bauteil ausgebildet ist.

9. Fahrzeuglenkrad nach einem der vorhergehenden Ansprüche, **dadurch gekennzeichnet, daß** sich die Kontaktdrähte (50,54;150,154), in Richtung Längsachse gesehen, kreuzen.

10. Fahrzeuglenkrad nach einem der vorhergehenden Ansprüche, **dadurch gekennzeichnet, daß** die Kontaktdrähte (50,54;150,154) im wesentlichen parallel verlaufend in einem Abstand zueinander angeordnet sind und daß der bei Hupenbetätigung bewegte Kontaktdraht (150) eine bogenförmige Krümmung (150a) aufweist und im Bereich der Krümmung (150a) den anderen Kontaktdraht (154) berührt.

## Claims

1. A vehicle steering wheel comprising a steering wheel skeleton (10, 110), a longitudinal axis (A), and a horn contact switch which has two electrical contact elements which are brought in contact with each other by means of a movement of two components relative to each other for a horn actuation, **characterized in that** the electrical contact elements are contact wires (50, 54; 150, 154).

2. The vehicle steering wheel according to Claim 1, **characterized in that** the contact wires (50, 54; 150, 154) are provided uncoupled from each other on the components which perform a movement relative to each other when the horn is actuated.

3. The vehicle steering wheel according to either of the preceding claims, **characterized in that** both contact wires (150, 154) are provided on a common component at a distance from each other, at least one of the contact wires (150) being moved towards the other by the action of force from outside when the horn is actuated.

4. The vehicle steering wheel according to any of the preceding claims, **characterized in that** at least one of the contact wires (50; 154) is constructed so as to be flexible.

5. The vehicle steering wheel according to any of the preceding claims, **characterized in that** one of the components approaching each other when the horn is actuated comprises a gas bag module (12, 112) mounted flexibly on the steering wheel skeleton (10, 110) and displaceably in the direction of the longitudinal axis (A), and that the horn contact switch is arranged between the gas bag module (12, 112) and the steering wheel skeleton (10, 110).

6. The vehicle steering wheel according to Claim 4 or 5, comprising at least one restoring spring acting between the components approaching each other when the horn is actuated, the flexible contact wire (154) serving as restoring spring.

7. The vehicle steering wheel according to any of Claims 4 to 6, **characterized by** an actuating element which presses one contact wire (154) against the other when the horn is actuated.

8. The vehicle steering wheel according to Claim 7, **characterized in that** the actuating element is constructed as a projection (158) on the rear side of the component moved by the driver for actuating the horn.

9. The vehicle steering wheel according to any of the preceding claims, **characterized in that** the contact wires (50, 54; 150, 154) intersect each other as viewed in the direction of the longitudinal axis.

10. The vehicle steering wheel according to any of the preceding claims, **characterized in that** the contact wires (50, 54; 150, 154) are arranged to run substantially parallel at a distance from each other, and that the contact wire (150) which is moved when the horn is actuated has an arc-shaped curvature (150a) and touches the other contact wire (154) in the region of the curvature (150a).

## Revendications

1. Volant de direction de véhicule, comportant un squelette de volant de direction (10, 110), un axe longitudinal (A) et un commutateur de contact de klaxon qui présente deux éléments de contact électriques qui sont amenés en contact mutuel pour un actionnement de klaxon au moyen d'un mouvement relatif de deux composants l'un par rapport à l'autre, **caractérisé en ce que** les éléments de contact électriques sont des fils de contact (50, 54 ; 150, 154).

2. Volant de direction de véhicule selon la revendication 1, **caractérisé en ce que** les fils de contact (50, 54 ; 150, 154) sont prévus découplés les uns des autres sur les composants qui, lors de l'actionnement du klaxon, exécutent un mouvement relatif les uns par rapport aux autres.

3. Volant de direction de véhicule selon l'une des revendications précédentes, **caractérisé en ce que** les deux fils de contact (150, 154) sont prévus à une distance l'un de l'autre sur un composant commun, au moins un des fils de contact (150) étant déplacé en direction de l'autre par effet de force venant d'extérieur lors de l'actionnement du klaxon.

4. Volant de direction de véhicule selon l'une des revendications précédentes, **caractérisé en ce qu'**au moins un des fils de contact (50 ; 154) est réalisé de manière élastique.

5. Volant de direction de véhicule selon l'une des revendications précédentes, **caractérisé en ce qu'**un des composants qui se rapprochent lors de l'actionnement du klaxon comprend un module de coussin à gaz (12, 112) logé de manière élastique sur le squelette de volant de direction (10, 110) et de manière à se déplacer en direction de l'axe longitudinal (A), et **en ce que** le commutateur de contact du klaxon est agencé entre le module de coussin à gaz (12, 112) et le squelette de volant de direction (10, 110).

6. Volant de direction de véhicule selon la revendication 4 ou 5, comportant au moins un ressort de rappel agissant entre les composants qui se rapprochent lors de l'actionnement du klaxon, le fil de contact (154) élastique servant de ressort de rappel.

7. Volant de direction de véhicule selon l'une des revendications 4 à 6, **caractérisé par** un élément d'actionnement qui presse un fil de contact (154) contre l'autre lors de l'actionnement du klaxon.

8. Volant de direction de véhicule selon la revendication 7, **caractérisé en ce que** l'élément d'actionnement est réalisé sous forme de saillie (158) sur la face postérieure du composant déplacé par le conducteur pour actionner le klaxon.

9. Volant de direction de véhicule selon l'une des revendications précédentes, **caractérisé en ce que** les fils de contact (50, 54 ; 150, 154) se croisent, vu en direction de l'axe longitudinal.

10. Volant de direction de véhicule selon l'une des revendications précédentes, **caractérisé en ce que** les fils de contact (50, 54 ; 150, 154) sont agencés en s'étendant de manière sensiblement parallèle à distance les uns des autres, et **en ce que** le fil de contact (150) déplacé lors de l'actionnement du klaxon, présente une courbure (150a) en forme d'arc et touche l'autre fil de contact (154) dans la région de la courbure (150a).
